# EUROPÄISCHE PATENTANMELDUNG

(11) **EP 2 829 179 A1**
(43) Veröffentlichungstag der Anmeldung: **28.01.2015**
(21) Anmeldenummer: 08000526.7
(22) Anmeldetag: 12.01.2008
(51) Int. Cl.: A01N 59/00, A01N 59/16

(54) **Desinfektionsmittel**

(30) Priorität: 25.01.2007 DE 102007003693
(71) Anmelder: Landmann, Johann, 5602 Wagrain (AT)
(72) Erfinder: Landmann, Johann, 5602 Wagrain (AT)
(74) Vertreter: vP-IP von Puttkamer Berngruber Loth Spuhler

(57) **Zusammenfassung**

Silber und Wasserstoffperoxid enthaltendes Desinfektionsmittel, gekennzeichnet durch folgende Zusammensetzung pro Liter:
5 - 100 g Lösungsvermittler,
5 - 70 g Wasserstoffperoxid,
5 - 70 g Tensid,
0,1 - 20 mg kolloidales Silber, und
Wasser als Rest.

## Beschreibung

Die Erfindung bezieht sich auf ein Desinfektionsmittel, das Silber und Wasserstoffperoxid enthält.

Derartige Desinfektionsmittel sind bekannt. So geht aus DE 36 45 266 C2 ein Desinfektionsmittel hervor, das aus Phosphorsäure, ca. 100 g Silbernitrat pro Liter, Gelatine und etwa 1 % Wasserstoffperoxid hergestellt wird. Das bekannte Produkt ist jedoch instabil, so dass es in einem aufwändigen Druckbehälter mit einem Überdruckventil aufbewahrt werden muss.

Aufgabe der Erfindung ist es, ein Silber und Wasserstoffperoxid enthaltendes Desinfektionsmittel bereitzustellen, das sich durch hohe Stabilität, hohe Wirksamkeit und geringe Herstellungskosten auszeichnet.

Es wird erfindungsgemäß mit einem Desinfektionsmittel erreicht, das pro Liter
5 - 100 g, vorzugsweise 20 - 80 g Lösungsvermittler,
5 - 70 g, vorzugsweise 10 - 40 g Wasserstoffperoxid,
5 - 70 g, vorzugsweise 10 - 40 g Tensid, sowie
kolloidales Silber, und zwar 0,1 bis 20 mg, vorzugsweise maximal 5 mg, bezogen auf das Gewicht des Silbers, und als Rest im wesentlichen Wasser enthält.

Als Lösungsvermittler werden Emulgatoren eingesetzt. Dabei haben sich als Lösungsvermittler insbesondere hydriertes, mit Polyethylen umgesetztes Rizinusöl (Hydrogenated Castor Oil), insbesondere hydriertes mit PEG-40 umgesetztes Rizinusöl (PEG-40 Hydrogenated Castor Oil) sowie Fettalkoholoxylate, insbesondere Trideceth-9 (Poly(oxy-1,2-ethandiyl)a-Tridecyl-w-hydroxy) als geeignet erwiesen.

Der Anteil des hydrierten, mit Polyethylen umgesetzten Rizinusöl und/oder der Fettalkoholoxylate in dem Lösungsvermittler beträgt dabei vorzugsweise mindestens 20 Gew.%. So hat sich ein handelsüblicher Lösungsvermittler folgender Zusammensetzung als besonders geeignet erwiesen:
25 - 50 Gew.-% PEG-40 Hydrogenated Castor Oil
25 - 50 Gew.-% Trideceth-9
1 - 5 Gew.-% Propylen Glykol
1 - 5 Gew.-% Wasser

Als Tenside werden vorzugsweise Fettalkoholsulfate und Fettalkoholethersulfate eingesetzt, die z. B. unter der Bezeichnung "Texapon" (eingetragene Marke) im Handel sind, beispielsweise Natriumlaurylethersulfat.

Das erfindungsgemäße Desinfektionsmittel kann noch weitere Stoffe enthalten, beispielsweise Farb- und Duftstoffe, sofern sie die Stabilität des Desinfektionsmittels nicht beeinträchtigen.

Als Duftstoffe werden dabei bevorzugt ätherische Öle eingesetzt, z. B. Thymianöl (Inhaltsstoffe: Thymol, Carvacrol, Limonen, alpha- und beta-Pinen), Manukaöl und/oder Zitronenöl. Dabei kann es sich um natürliche oder naturidentische ätherische Öle handeln.

Der Anteil der ätherischen Öle kann beispielsweise zwischen 0,1 g und 10 g, vorzugsweise 1 - 5 g pro Liter Desinfektionsmittel betragen.

Das erfindungsgemäße Desinfektionsmittel kann z. B. dadurch hergestellt werden, dass der Lösungsvermittler, das Wasserstoffperoxid und das Tensid in dieser Reihenfolge in das Wasser eingerührt werden und dann das kolloidale Silber unter Rühren zu dem Gemisch gegeben wird.

Dabei wird das Wasserstoffperoxid vorzugsweise als 30 - 70 Gew.%ige wässrige Lösung eingesetzt. Als Wasser wird vorzugsweise destilliertes oder entionisiertes Wasser verwendet.

Das kolloidale Silber ist ein wässriges Silberkolloid, und zwar besteht es vorzugsweise aus 1 - 10 Gew.% Silber und 90 - 99 Gew.% Wasser. So ist beispielsweise ein kolloidales Silber mit 5 Gew.% Silber im Handel erhältlich.

Das erfindungsgemäße Desinfektionsmittel weist eine hohe Wirksamkeit auf, die der der handelsüblichen, instabilen Silber und Wasserstoffperoxid enthaltenden Desinfektionsmittel zumindest entspricht.

Da sie aus handelsüblichen preiswerten Bestandteilen hergestellt werden kann und einen geringen Silbergehalt aufweist, ist das erfindungsgemäße Desinfektionsmittel zudem mit geringen Kosten herstellbar. Trotz des relativ hohen Wasserstoffperoxidgehaltes ist es stabil und kann in normalen Behältern z. B. aus Kunststoff aufbewahrt werden, und zwar, soweit ersichtlich, über Jahre.

Das erfindungsgemäße Desinfektionsmittel eignet sich beispielsweise für feste Oberflächen, aber auch für die Entkeimung von Wasser und dgl. Für die Flächendesinfektion kann beispielsweise eine 0,1 - 2 Gew.%ige wässrige Lösung des erfindungsgemäßen Desinfektionsmittels verwendet werden, zur Wasserentkeimung reicht eine geringe Konzentration von etwa 10 - 100 ppm des erfindungsgemäßen Desinfektionsmittels aus. Die mit dem erfindungsgemäßen Desinfektionsmittel desinfizierten Produkte oder Gegenstände weisen keinerlei Veränderung des Geschmacks oder Aussehens auf. Sofern keine Duftstoffe verwendet werden, sind sie auch völlig geruchsneutral. Darüber hinaus sind sie ungiftig und erzeugen weder Hautreizungen noch andere gesundheitliche Beeinträchtigungen oder Schäden. Auch ist das erfindungsgemäße Desinfektionsmittel für übliche Materialien, wie Beton, Holz, Stein, Glas, Metalle, Porzellan, Keramik, Kunststoffe, Textilien usw. völlig inert.

In den oben angegebenen Konzentrationen werden mit dem erfindungsgemäßen Desinfektionsmittel pathogene Keime weitgehend vernichtet, und zwar sowohl grampositive und gramnegative Bakterien, wie z. B. Escherichia coli und Staphylokokken, aber auch Viren und andere Mikroorganismen. Das erfindungsgemäße Desinfektionsmittel eignet sich insbesondere zur Entkeimung in der Nahrungs- und Futtermittel-Industrie, in der Getränkeindustrie, zur Wasserdesinfektion, z. B. von Schwimmbädern. Darüber hinaus kann eine Flächendesinfektion in der chemischen und pharmazeutischen Industrie, in Laboratorien, Spitälern und dergleichen durchgeführt werden.

Das nachstehende Beispiel dient der weiteren Erläuterung der Erfindung:
Zur Herstellung von einem Liter Desinfektionsmittel werden in 827 g entionisiertes Wasser nacheinander eingerührt:
50 g Lösungsvermittler (25 bis 50 Gew.% PEG-40 Hydrogenated Castor Oil, 25 bis 50 Gew.% Trideceth-9, 1 bis 5 % Propylen Glycol, 1 bis 5 % Wasser), 3 g ätherische Öle,
50 g Wasserstoffperoxid (ca. 50 gew.%ige wässrige Lösung), 70 g einer ca. 28 gew.%igen wässrigen
   Natriumlaurylethersulfat-Lösung, und anschließend 0,005 g wässriges Silberkolliod (5 Gew.% Silber; 95 Gew.% Wasser).

## Patentansprüche

1. Silber und Wasserstoffperoxid enthaltendes Desinfektionsmittel, **gekennzeichnet durch** folgende Zusammensetzung pro Liter:
5 - 100 g Lösungsvermittler,
5 - 70 g Wasserstoffperoxid,
5 - 70 g Tensid,
0,1 - 20 mg kolloidales Silber, und
Wasser als Rest.

2. Desinfektionsmittel nach Anspruch 1, **dadurch gekennzeichnet, dass** der Anteil des Lösungsvermittlers 20 bis 80 g, des Wasserstoffperoxids 10 bis 40 g und des Tensids 10 bis 40 g beträgt.

3. Desinfektionsmittel nach Anspruch 1, **dadurch gekennzeichnet, dass** der Lösungsvermittler mindestens 20 Gew.% eines hydrierten mit Polyethylen umgesetzten Rizinusöls und/oder mindestens 20 Gew.% eines Fettalkoholoxylats enthält.

4. Desinfektionsmittel nach Anspruch 3, **dadurch gekennzeichnet, dass** das hydrierte, mit Polyethylen angesetzte Rizinusöl hydriertes, mit PEG-40 umgesetztes Rizinusöl ist.

5. Desinfektionsmittel nach Anspruch 3 oder 4, **dadurch gekennzeichnet, dass** das Fettalkoholoxylat Trideceth-9 ist.

6. Desinfektionsmittel nach einem der vorstehenden Ansprüche, **dadurch gekennzeichnet, dass** das Tensid ein Fettalkoholsulfat und/oder Fettalkoholethersulfat ist.

7. Desinfektionsmittel nach Anspruch 6, **dadurch gekennzeichnet, dass** das Tensid Natriumlaurylethersulfat ist.

8. Desinfektionsmittel nach einem der vorstehenden Ansprüche, **dadurch gekennzeichnet, dass** es außerdem ätherische Öle enthält.

9. Verfahren zur Herstellung des Desinfektionsmittels nach einem der vorstehenden Ansprüche, **dadurch gekennzeichnet, dass** der Lösungsvermittler, gegebenenfalls die ätherischen Öle das Wasserstoffperoxid und das Tensid mit dem Wasser vermischt und dann das kolloidale Silber zugegeben wird.

10. Verfahren nach Anspruch 9, **dadurch gekennzeichnet, dass** das kolloidale Silber als Kolloid aus 1 bis 10 Gew.% Silber und 90 bis 99 Gew.% Wasser zugegeben wird.
